# EUROPEAN PATENT APPLICATION

(11) **EP 3 407 250 A1**
(43) Date of publication of application: **28.11.2018**
(21) Application number: 18169674.1
(22) Date of filing: 26.04.2018
(51) Int. Cl.: G06K 9/00

(54) **METHOD OF PRIORITIZING SENSORS FOR A PERCEPTION SYSTEM AND PERCEPTION SYSTEM FOR A MOTOR VEHICLE**

(30) Priority: 26.05.2017 US 201715606796
(71) Applicant: Dura Operating, LLC, Auburn Hills, MI 48326 (US)
(72) Inventor: HOVIS, Jeffrey Gene, Almont, MI 48003 (US); SZCZERBA, Michael Bernhard, Troy, MI 48084 (US)
(74) Representative: Bungartz Christophersen Partnerschaft mbB Patentanwälte

(57) **Abstract**

A method and system is provided for prioritizing sensors for a perception system for a motor vehicle. A plurality of sensors collects sensor information about a surrounding area of the vehicle. A perception scene graph (PSG) is generated by a perception controller based on the collected sensor information. A primary focus region and a secondary focus region is defined in the virtual map of the surrounding area within the PSG. Overlapping regions between the focus regions are identified. A high-level priority is assigned to the sensors collecting information contributing to the primary focus region. A low-level priority is assigned to the sensors collecting information contributing to the secondary focus region. A mid-level priority is assigned to the sensors collecting information contributing to an overlapping focus region. Information collected by the high-level priority sensors is allocated a greater processing power than the information collected by low-level priority sensors.

## Description

The invention relates generally to perception systems for a motor vehicle; more particularly, to a method and system of prioritizing sensors for a perception system.

The statements in this section merely provide background information related to the present disclosure and may or may not constitute prior art.

Advanced Driver Assistance Systems (ADAS) are used in motor vehicles to enhance or automate selective motor vehicle systems in order to increase occupant safety and operator driving performance. ADAS include vehicle controllers that are in communication with external sensors, vehicle state sensors, and selective motor vehicle systems, such as occupant safety systems and vehicle control systems. The vehicle controllers analyze information gathered by the external sensors and vehicle state sensors to provide instructions to the vehicle control systems to assist the vehicle in avoiding and navigating around obstacles as the vehicle travels down a road.

Typical vehicle controllers include processors and non-transitive memories. The non-transitive memories contained predefined routines executable by the processors and databases accessible by the processors. The processors analyze the information supplied by the external sensors to detect and isolate objects from the background scene. The processors classify the objects by comparing the objects to reference objects stored in the databases. Once the objects are isolated and identified, the distance and direction of the objects relative to the motor vehicle are determined. The vehicle controllers then communicate instructions to the motor vehicle systems, including steering, throttle, and braking control systems, to negotiate a path to avoid contact with the objects or activate safety systems if contact with an object is imminent.

Thus, while current ADAS having vehicle controllers adequate to process information from external sensors to achieve their intended purpose; there is a need for a new and improved system and method for prioritizing and processing information from externa sensors for increased efficiency.

According to several aspects, a method a method of prioritizing sensors for a perception system, comprising the steps of collecting sensor information, by a plurality of sensors, about a surrounding area of a motor vehicle; generating a perception scene graph (PSG), by a perception controller; defining a primary focus region and a secondary focus region in the surrounding area; and assigning a high-level priority to the primary focus region, and assigning a low-level priority to the secondary focus region.

In an additional aspect of the present disclosure, the PSG comprises a virtual map of the surrounding area based on the collected sensor information and the primary focus region as well as the secondary focus region are defined in in the virtual map of the surrounding area; the high-level priority is assigned to the sensors collecting information contributing to the primary focus region, and the low-level priority is assigned to the sensors collecting information contributing to the secondary focus region.

According to several aspects, a method of prioritizing sensors for a perception system is disclosed. The method includes the steps of collecting sensor information, by a plurality of sensors, about a surrounding area of a motor vehicle; generating a perception scene graph (PSG), by a perception controller, including a virtual map of the surrounding area based on the collected sensor information; defining a primary focus region and a secondary focus region in the virtual map of the surrounding area; and assigning a high-level priority to the sensors collecting information contributing to the primary focus region, and assigning a low-level priority to the sensors collecting information contributing to the secondary focus region.

In an additional aspect of the present disclosure, the method further includes the step of allocating a greater processing power to process the information collected by the high-level priority sensors than to process the information collected by low-level priority sensors.

In another aspect of the present disclosure, the method further includes the steps of identifying an overlapping region between the primary focus region and a secondary focus region; assigning a mid-level priority to the sensors collecting information contributing to any overlapping focus region; and allocating a processing power to process the information collected by the mid-level priority sensors, wherein the processing power is less than the processing power allocated for the high-level sensors but greater than the processing power allocated for the low-level sensors.

In another aspect of the present disclosure, the primary focus region is determined by a perception controller based on predetermined criteria required for the safe operation of the vehicle.

In another aspect of the present disclosure, the method further includes the step of extracting information from the PSG, by a state decision logic controller, for executing a vehicle software application. The secondary focus region is determined by the vehicle software application.

In another aspect of the present disclosure, the method further includes the step of identifying a first group of sensors. Each sensor includes an effective coverage area that covers at least a portion of the primary focus region. The method also includes the steps of fusing the collected sensor information from the first group of sensors to obtain the overall coverage area of the first group of sensors; comparing the overall area of coverage of the first group of sensors with the primary focus region; and if the overall area of coverage of the first group of sensors is less than then primary focus region, then the perception controller generates a warning signal.

In another aspect of the present disclosure, the method further includes the steps of identifying a second group of sensors, wherein each sensor includes an effective coverage area that covers at least a portion of the second focus region; fusing the collected sensor information from the second group of sensors to obtain the overall coverage area of the second group of sensors; comparing the overall area of coverage of the secondary group of sensors with the secondary focus region; and if the overall area of coverage by the second group of sensors is less than secondary focus region, then the perception controller generates a warning signal.

In an additional aspect of the present disclosure, the method further includes the step of allocating greater processing power to the first group of sensors than the second group of sensors.

In another aspect of the present disclosure, the method further includes the steps of identifying a subset of sensors from the first group of sensors and second group of sensors, wherein the subset of sensors has an overall coverage area that includes the overlapping region; and allocating greater processing power to the subset of sensors than the second group of sensors, but less than the first group of sensors.

According to several aspects, a method of prioritizing sensors for a perception system is disclosed. The method includes the steps of determining a primary focus region in a surrounding area of a vehicle; determining a secondary focus region in the surrounding area of the vehicle; identifying an overlapping region between the primary focus region and a secondary focus region; assigning a high-level priority to the primary focus region, a mid-level priority to the over lapping region, and a low-level priority to the second focus region; collecting information, by a plurality of sensors, on the primary, secondary, and overlapping focus regions; and allocating processing power to process collected information, wherein information collected from a high-level priority region will be allocated greater processing power than the information collected from the mid-level or low-level priority regions.

In an additional aspect of the present disclosure, the information collected from a mid-level priority region is allocated lesser processing power than the information collected from high-level priority region, but higher processing power than the information collected from low-level priority region.

In another aspect of the present disclosure, the method further includes the steps of identifying sensors, where each sensor includes an effective coverage area that covers at least a portion of the primary focus region; fusing the collected sensor information from the plurality of sensors to obtain the overall coverage area; comparing the overall coverage area with the primary focus region; and if the primary focus area is greater than the overall coverage area, then generate an alarm signal.

In another aspect of the present disclosure, the method further includes the steps of identifying sensors, where each sensor includes an effective coverage area that covers at least a portion of the secondary focus region; fusing the collected sensor information from the plurality of sensors to obtain the overall coverage area; comparing the overall coverage area with the secondary focus region; and if the secondary focus area is greater than the overall coverage area, then generate an alarm signal.

In another aspect of the present disclosure, the primary focus region is determined by a perception controller based on the predetermined operating parameters of the vehicle.

In another aspect of the present disclosure, the secondary focus region is determined by a perception controller based on the input required by vehicle software applications.

According to several aspects, a perception system for a motor vehicle is disclosed. The perception system includes a plurality of sensors configured to gather information on a surrounding area of the motor vehicle; a pre-processor in communication with the plurality of sensors, wherein the pre-processor is configured to isolate and detect objects in the surrounding of the motor vehicle;at least one perception controller in communication with the pre-processor to receive the processed sensor information to generate a perception scene graph (PSG) containing a virtual map of the surroundings area based on the gathered information; and a plurality of state sensors configured to determine the state of the vehicle including at least one of a vehicle state comprising heading, velocity, and acceleration. The perception controller is further configured to identify a primary focus region in the PSG based on the predetermined state of the vehicle for the safe operation of the vehicle.

In an additional aspect of the present disclosure, the system further includes a state decision logic controller configured to extract information from the PSG to execute a vehicle application routine. The vehicle application routine includes instructions to identify a secondary focus region.

In an additional aspect of the present disclosure, the perception controller is further configured to identify an overlapping focus region by determining the overlapping regions of the primary focus region and the secondary order focus region.

In an additional aspect of the present disclosure, the perception controller is configured to assign a high-level priority to the primary focus region, a mid-level priority to the overlapping focus region, and a low-level priority to the secondary focus region.

In an additional aspect of the present disclosure, the perception controller is further configured to identifying at least one first sensor that has a sensor region that overlaps the primary focus region, at least one second sensor that has a sensor region that overlaps the secondary focus region, and at least one third sensor that has a sensor region that overlaps the overlapping focus region; wherein a sensor region is the area of detection of a sensor.

In an additional aspect of the present disclosure, the perception controller is further configured to determine if one or more of the focus regions is not completely overlapped by one or more sensor regions, and activate a warning system if one or more of the focus regions is not completely overlapped by one or more sensor regions.

It should be understood that the description and specific examples are intended for purposes of illustration only and are not intended to limit the scope of the present disclosure.

The drawings described herein are for illustration purposes only and are not intended to limit the scope of the present disclosure in any way.
- FIG. 1: is a functional diagram of a process for generating and using a perception scene graph (PSG) in a motor vehicle, according to an exemplary embodiment;
- FIG. 2: is a functional diagram of a perception system and a vehicle state decision logic (SDL) controller, according to an exemplary embodiment;
- FIG. 3: is a vehicle having the perception system and the vehicle SDL controller of FIG. 2, according to an exemplary embodiment;
- FIG. 4: is a rendering of the information contained in the PSG published by the perception system of FIG. 2, according to an exemplary embodiment;
- FIG. 5: is a flow diagram showing a method of generating a PSG having at least one focus region; and
- FIG. 6: shows a method for prioritizing sensors for a perception system.

The following description is merely exemplary in nature and is not intended to limit the present disclosure, application, or uses.

A perception scene graph (PSG) is a data structure that contains processed information representing a virtual 3-Dimensonal (3-D) model of a volume of space and/or area surrounding the motor vehicle, including any objects within that volume of space and/or area. A PSG can be viewed as a visually-grounded graphical structure of the real-world surrounding the motor vehicle. In the PSG, objects are isolated from the background scene, characterized, and located with respect to the motor vehicle. The movements of the objects may be tracked and recorded. The movements of the objects may also be predicted based on historic locations and trends in the movements.

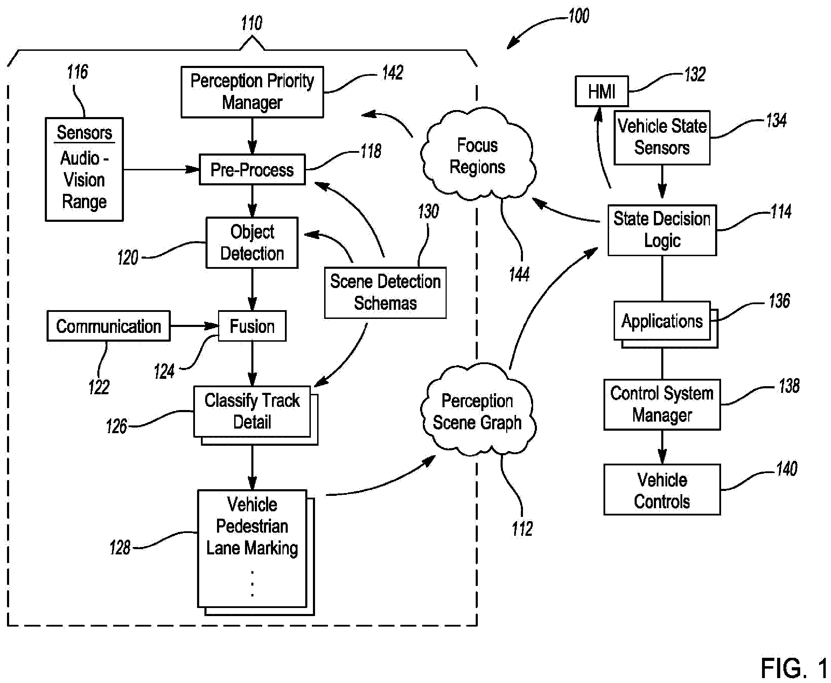

FIG. 1 shows a functional diagram 100 of a perception process 110 for generating a perception scene graph (PSG) 112 and the use of the PSG 112 by a motor vehicle having state decision logic (SDL) 114. The perception process 110 publishes the PSG 112 and the vehicle SDL 114 subscribes to and extracts the processed information from the PSG 112. The vehicle SDL 114 uses the extracted information as input for the execution of a variety of vehicle software applications.

The perception process 110 starts in block 116 where the external sensors of the motor vehicle gather information about a volume of space surrounding the motor vehicle, including the adjacent surrounding areas. The gathered raw information is pre-processed in block 118 and objects are isolated and detected in block 120 from the background scene. The distance and direction of each object relative to the motor vehicle are also determined. The information gathered about a volume of space, including the adjacent areas, surrounding the motor vehicle is limited by the audio-visual ranges of the external sensors.

In block 122, incoming communications containing information on additional objects within and/or beyond the audio-visual range of the external sensors are communicated to the motor vehicle via vehicle-to-everything (V2X) communication to supplement the objects detected in block 120. V2X communication is the passing of information from a vehicle to any communication device and vice versa, including, but not limited to, vehicle-to-vehicle (V2V), vehicle-to-infrastructure (V2I), vehicle-to-pedestrian (V2P), vehicle-to-device (V2D), and vehicle-to-grid (V2G) communications. In block 124, the information gathered by the external sensors from block 116 and information communicated to the motor vehicle from block 122 are fused to increase the confidence factors of the objects detected together with the range and direction of the objects relative to the motor vehicle.

In blocks 126 and 128, once the various information are fused, the detected objects are compared with reference objects in a database to identify the classification of the objects. The types of classification include, but are not limited to, types of lane markings, traffic signs, infrastructure, vehicles, pedestrians, animals, and any other animate or inanimate objects that may be found in a typical roadway. Once the objects are classified, the movements of the objects are tracked and predicted based on historic locations and trends in movement of the objects.

The perception process 110 is partially controlled by a scene detection schema (SDS) at block 130. The SDS describes what objects in block 120 and classifications in block 126 to search for at a particular point in time. In block 142, a perception priority manager has the responsibility to control and manage which tasks to perform in the perception pre-processing of block 118. For example, the perception priority manager may allocate greater processing power to the sensors directed rearward of the vehicle as the vehicle is moving rearward into a parking space.

The PSG 112 is generated containing information on a set of localized objects, categories of each object, and relationship between each object and the motor vehicle. The PSG 112 is continuously updated by the information gathered by the external sensors in block 116 and communications received by V2X communications in block 122 to reflect the real time change of the adjacent and non-adjacent volume of space and areas surrounding the motor vehicle. The historical events of the PSG 112 may be recorded in the perception controller's memory to be retrieve at a later time.

In block 114, the vehicle SDL, which may be part of the motor vehicle ADAS, subscribes to the PSG 112 to extract information pertaining to the external surrounding volume of space and areas of the motor vehicle. The vehicle SDL 114 can process the information contained in the PSG 112 to render and display on a human machine interface (HMI) 132, such as a display monitor on the dash of the motor vehicle, a virtual three-dimensional landscape representing the real-world environment surrounding the motor vehicle.

The vehicle SDL 114 can also analyze the information extracted from the PSG 112 to manage the current state of the vehicle control system managers 138 and to control the transitions of the control system managers 138 to new states. The vehicle SDL 114 receives information from the vehicle state sensors of block 134 to determine the state of the motor vehicle such as location, velocity, acceleration, yaw, pitch, etc. With information from the PSG 112 and vehicle state sensor information from block 134, the vehicle SDL 114 can execute routines contained in software applications in block 136 to send instructions to the motor vehicle control system manager 138 to operate the vehicle controls 140.

As the vehicle SDL 114 executes routines contained in software applications 136, the software applications 136 may require greater fidelity or information relating to regions of interest, or focus regions 144. This would be similar to the action taken by a vehicle driver of turning their head to see if a vehicle is present before they perform a lane change. A focus region 144 defines an area or volume of space that is important to the software applications of block 136 during a particular time span. The required focus region 144 is communicated to the perception priority manger in block 142, which in turn the priority manager allocates greater processing power to the sensors directed to the required focus region 144 and allocates greater processing power to the sensors directed.

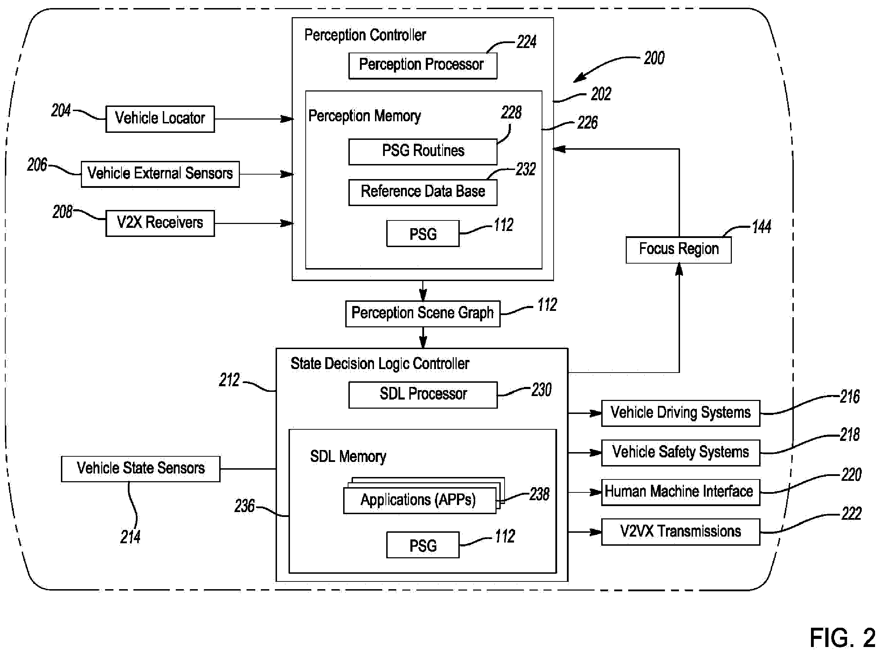

FIG. 2 shows a functional diagram of a perception system 200 having a perception controller 202 configured to receive information from a vehicle locator 204, a plurality of external sensors 206, and V2X receivers 208. FIG. 2 also shows a functional diagram of a SDL controller 212 configured to receive vehicle state information from a plurality of vehicle state sensors 214. The SDL controller 212 is configured to be in communication with the vehicle driving systems 216, vehicle safety systems 218, vehicle HMI 220, and vehicle V2X transmitters 222.

The perception controller 202 includes a perception processor 224 and a perception memory 226. The perception processor 224 processes the information gathered from the vehicle locator 204, external sensors 206, and V2X receivers, and executes PSG routines 228 stored in the perception memory 226 to generate the PSG 112 in real time as the motor vehicle is stationary or traveling along a roadway. A real time copy of the PSG 112 is published in the perception memory 226 for availability to various systems that require information pertaining to the surroundings of the vehicle. The perception memory 226 also includes a reference database 232 containing reference objects that are used to compare with the detected objects for classifying the detected objects. The reference database 232 includes the geometry and classifications of each of the reference objects.

The external sensors 206 are sensors that can detect physical objects and scenes surrounding the motor vehicle. The external sensors 206 include, but are not limited to, radar, laser, scanning laser, camera, sonar, ultra-sonic devices, LIDAR, and the like. The external sensors 206 may be mounted on the exterior of the vehicle such as a rotating laser scanner mounted on the roof of the vehicle or mounted within the interior of the vehicle such as a front camera mounted behind the windshield. Certain of these external sensors 206 are configured to measure the distance and direction of the detected objects relative to the location and orientation of the motor vehicle. Raw information acquired by these external sensors 206 are processes by the perception controller 202 to determine the classification, size, density, and/or color of the detected objects. The external sensors 206 are configured to continuously update their outputs to the perception controller 202 to reflect the real-time changes in the volume of space and areas surrounding the motor vehicle as information is being collected.

The vehicle SDL controller 212 includes a SDL processor 234 and a SDL memory 236. The SDL controller 212 receives information from the vehicle state sensors 214 and is in communication with various vehicle systems and components such as the driving system 216, safety system 218, HMI 220, and V2X transmitters 222. The SDL processor 230 processes information gathered by the vehicle state sensors 214 and subscribes to the PSG 112 to execute software applications stored in the SDL memory 236 to issue instructions to one or more of the vehicle systems 216, 218, 220, 222. The routines include various vehicle software applications 238, also known as vehicle APPS 238, including routines for the operations of the vehicle driving and safety systems 216, 218. For example, the vehicle SDL controller 212 may be in communication with the vehicle driving system 216 that controls the vehicle's deceleration, acceleration, steering, signaling, navigation, and positioning. The SDL memory 236 may also include software applications to render the information stored in the PSG 112 to be displayed on a HMI device 220 such as a display monitor on the dash of the vehicle. The SDL memory 236 may also include software applications 238 that require greater fidelity information in area or volume of space, also known as a focus region 144 that is important to the software applications 238 during a particular time span. The required focus region 144 is communicated to the perception controller 202 by the SDL controller 212. The perception controller 202 allocates greater processing power to process information collected by the external sensors 206 directed to the required focus region 144.

The perception and SDL processors 224, 230 may be any conventional processor, such as commercially available CPUs, a dedicated ASIC, or other hardware-based processor. The perception and SDL memories 226, 236 may be any computing device readable medium such as hard-drives, solid state memory, ROM, RAM, DVD or any other medium that is capable of storing information that is accessible to the perception processor. Although only one perception controller 202 and only one SDL controller 212 are shown, it is understood that the vehicle may contain multiple perception controllers 202 and multiple SDL controllers 212.

Each of the perception and SDL controllers 202, 212 may include more than one processor and memory, and the plurality of processors and memories do not necessary have to be housed within the respective controllers 202, 212. Accordingly, references to a perception controller 202, perception processor, and perception memories 226 include references to a collection of such perception controllers 202, perception processors, and perception memories that may or may not operate in parallel. Similarly, references to a SDL controller 212, SDL processor 230, and SDL memories 236 include references to a collection of SDL controllers 212, SDL processors 230, and SDL memories 236 that may or may not operate in parallel.

The information contained in the PSG 112 is normalized to the motor vehicle to abstract out the vehicle locator 204, external sensors 206, and V2X receivers 208 as the sources of the information. In other words, the SDL controller 212 is isolated from the raw information that the perception controller 202 receives from the vehicle locator 204, external sensors 206, and V2X receivers 208. With respect to the external surroundings of the motor vehicle, the SDL controller 212 extracts the processed information stored in the PSG 112 as input to execute software applications 238 for the operation of the motor vehicle. The SDL controller 212 does not see the real-world surroundings of the motor vehicle, but only see the virtual 3D model of the real-word surrounding generated by the perception controller 202. A primary benefit to this is that the external sensors 206 and types of external sensors 206 may be substituted without the need to replace the SDL processors 230 and/or upgrade the software applications contained in the SDL memories 236 to accommodate for the different external sensor types. A real-time copy of the PSG 112 may be published to the SDL controller 212 and to various other system controllers and/or computing devices throughout the motor vehicle. This ensures that if one or more of the perception controllers 202 and/or SDL controller 212 should fail, the various other system controllers and/or computing devices will be able to operate temporary in a "limp-home" mode to navigate the motor vehicle into a safe zone or area.

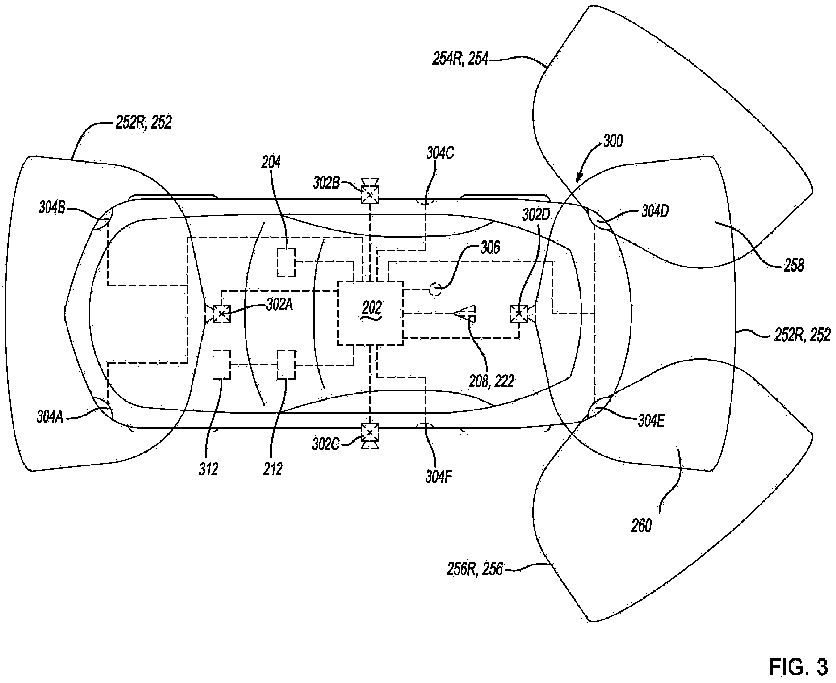

FIG. 3 shows an exemplary land based motor vehicle 300 equipped with the perception system 200 and SDL controller 212 of FIG. 2. For illustrative purposes, a passenger type motor vehicle is shown; however, the vehicle may be that of a truck, sport utility vehicle, van, motor home, or any other type of land based vehicle. It should be appreciated that the motor vehicle may also be that of a water based vehicle such as a motor boat or an air base vehicle such as an airplane without departing from the scope of the present disclosure.

The motor vehicle 300 includes a plurality of cameras 302 configured to capture images of the areas surrounding the motor vehicle 300. The exemplary motor vehicle 300 includes a front camera 302A, a right-side camera 302B, a left-side camera 302C, and a rear camera 302D. Each of the aforementioned cameras 302A-302D is configured to capture visual information in the visible light spectrum and/or in a non-visual (e.g. infrared) portion of the light spectrum in the field of view, or visual area of coverage, of the respective camera.

The motor vehicle 300 also includes a plurality of ranging sensors 304 distributed about the periphery of the motor vehicle and are configured to detect objects in the immediate vicinity adjacent the motor vehicle. FIG. 3 shows ranging sensors 304A-304F mounted on the periphery of the motor vehicle 300. Each of the ranging sensors 304A-304F may include any ranging technology, including radar, LiDAR, sonar, etc., capable of detecting a distance and direction between an object, such as a pedestrian, and the motor vehicle. The motor vehicle 300 may also include a scanning laser 306 mounted on top of the vehicle configured to scan the volume of space about the vehicle to detect the presence, direction, and distance of objects with that volume of space.

Each of the different types of external sensors 302, 304, 306 have their own unique sensing characteristics and effective ranges. The sensors 302, 304, 306 are placed at selected locations on the vehicle and collaborate to collect information on areas surrounding the motor vehicle. The sensor information on areas surrounding the motor vehicle may be obtained by a single sensor, such the scanning laser, capable of scanning a volume of space about the motor vehicle or obtained by a combination of a plurality of sensors. The raw data from the sensors 302, 304, 306 are communicated to a pre-processor or directly to the perception controller 202 for processing. The perception controller 202 is in communication with the vehicle SDL controller 212, which is in communications with a various vehicle control systems.

The motor vehicle 300 may include a V2X receiver 208 and V2X transmitter 222. The V2X receiver 208 and V2X transmitter 222 may include a circuit configured to use Wi-Fi and/or Dedicated Short Range Communications (DSRC) protocol for communication other vehicles equipped with V2V communications and to roadside units equipped with V2I communications to receive information such as lane closures, construction-related lane shifts, debris in the roadway, and stalled vehicle. The V2X receiver 208 and transmitters 222 enable the motor vehicle 300 to subscribe to other PSGs generated by other similar equipped vehicles and/or roadside units. The V2X receiver 208 and transmitters 222 also enable the motor vehicle 300 to publish the PSG 112 generated by the perception controller 202. Similarly equipped vehicles within range of the V2X transmitter 222 may subscribe to the published PSG 112. A PSG 112 covering an area greater than the effective ranges of the sensors 302, 304, 306 may be generated by fusing the information from multiple PSGs received from other similar equipped vehicles and/or roadside units capable of generating their own PSGs or transmitting of raw data for the perception controller 202 to process.

The motor vehicle includes a vehicle locator 204, such as a GPS receiver, configured to receive a plurality of GPS signals from GPS satellites to determine the longitude and latitude of the motor vehicle as well as the speed of the motor vehicle and the direction of travel of the motor vehicle. The location, speed, and direction of travel of the motor vehicle may be displayed on a preloaded electronic map and fused with the PSG 112.

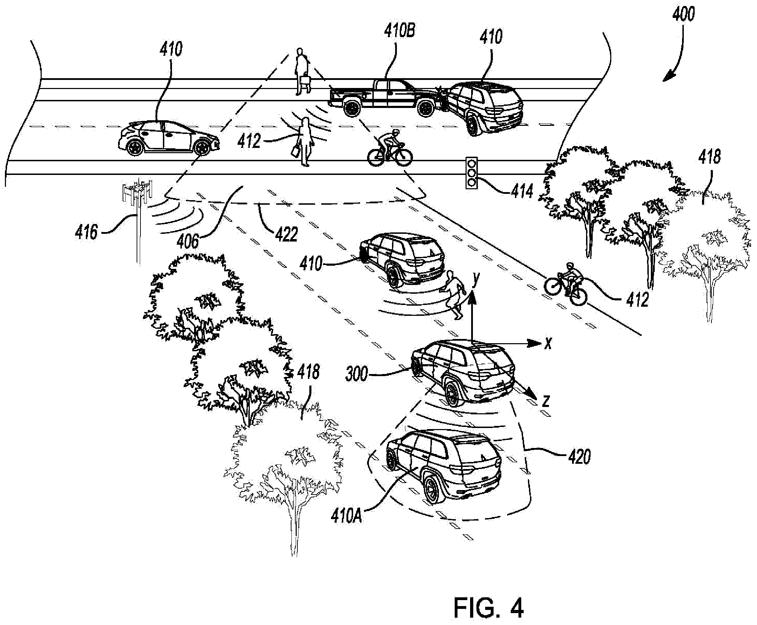

Shown in FIG. 4 is an exemplary illustration 400 of a rendering, also known as image synthesis, of an image of a virtual scene from the information contained in the PSG 112. The illustration 400 is a virtual three-dimensional (3-D) model of the real-world environment surrounding a host motor vehicle 300 including roads 404, intersections 406, and connections between these features. The illustration 400 presents a 3-D view of the objects and surfaces organized about the host motor vehicle 300. The scene also includes manmade objects such as adjacent vehicles 410, pedestrians 412, road signs 414, roadside unit infrastructure 416 such as communication towers 416, and natural objects such as trees 418 and roadside shrubbery 418 arranged in a spatial layout in the x, y, and z directions with respect to the host motor vehicle 300. The rendered objects may include additional details such as texture, lighting, shading, and color. The illustration 400 of the virtual scene is continuously updated in real time as new information is published to the PSG 112 as the host motor vehicle 300 travels down the roadway.

The virtual scene may contain detailed characteristics of the detected objects. For example, the detailed characteristics may include whether an adjacent vehicle 410 is facing toward or away from the host motor vehicle 300, the make and model of the adjacent vehicle 410, and the license plate number of the adjacent vehicle 410. The information to determine these detailed characteristics are collected and processed during the normal operation of the motor vehicle 300. The information is processed by a scene detection schema to determine the detailed characteristics.

The virtual 3-D model of the real-world environment surroundings contain detailed information beyond what can be gathered by the limited ranges of the motor vehicle external sensors 206. The information provided by the motor vehicle external sensors 206 is augmented by additional information supplied to the host motor vehicle 300 by similarly equipped adjacent vehicles 410 and infrastructure roadside units 416 via V2X communications.

The vehicle 300 is illustrated with an exemplary focus region 420 defined adjacent to the left-rear quarter of the vehicle 300. The vehicle SDL 114 executes routines contained in software applications that may require greater fidelity or information relating to regions of interest, or focus regions 144, in the PSG 112. The software routines may be activated by, but not limited to, inputs by the human driver such as activating a turn signal. In this example, the software routine would focus in on the region of interest as the area adjacent the left-rear quarter of the vehicle for the detection of objects, such as adjacent vehicle 410A, in the vehicle's blind spot. This would be similar to the action taken by a human driver of turning his/her head to see if a vehicle is present before the human driver performs a lane change. It should be appreciated that the focus regions do not necessary have to be adjacent to the vehicle. The focus regions may be remote from the vehicle 300, in which the focus regions are generated from information collected from the V2X receivers from remote vehicles 410 and/or roadside units 416.

A focus region is defined in the virtual 3-D world of the PSG 112 by the vehicle software applications. The focus region may correspond to a portion of the real-world area adjacent the motor vehicle. The priority manager identifies the external sensors having an effective sensor range that covers the corresponding portion of real-world area and increases processing power to the identified externals sensors to obtain greater fidelity and confidence of information about that corresponding portion of real-world area. The information collected from overlapping or partially overlapping sensors are fused to generate a high fidelity 3-D model of the focus region in the PSG. To account for the increase in processing power, the processing power to the external sensors not contributing to the focus region is decreased. As indicated above, a focus region 422 may also be remote from the vehicle 300. For example, FIG. 4 shows a remote focus region 422 covering an upcoming intersection 406. In this example, the remote focus region 422 is generated from information collected from a roadside unit 416 and from a remote vehicle 410B adjacent the intersection 406.

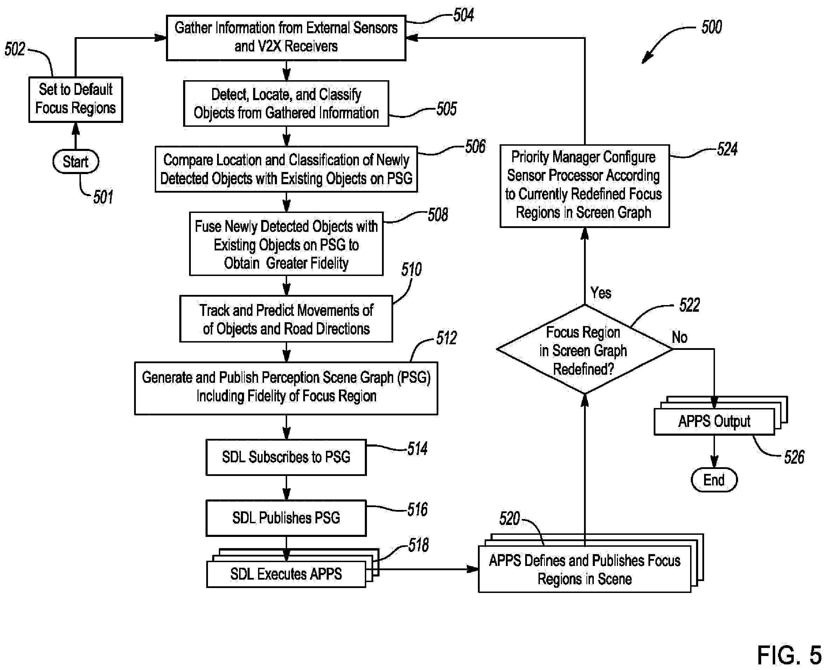

FIG. 5 shows a flowchart of a method 500 for generating a PSG 112 having at least one focus region during normal vehicle operations, in accordance with an embodiment. The method starts in step 501. In step 502, upon start-up of the motor vehicle or when the motor vehicle is shifted out of park, the perception controller 202 is initialized with default focus regions, such as the area directly in front and/or rear of the motor vehicle. In step 504, the external sensors 206 gather information on the surroundings of the motor vehicle and communicate the information to the perception controller 202. Additional information regarding the surroundings of the motor vehicle 300, including information that is outside the range of the external sensors 206, are communicated to the perception controller 202 by the V2X receivers 208.

In step 505, the information gathered by the external sensors 206 are processed to detect and isolate objects from the background scene. Once the objects are detected and isolated, the range and direction of the objects relative to the motor vehicle 300 are determined to locate the objects with respect to the motor vehicle in the PSG 112. The objects are compared with reference objects stored in the reference database 232 to classify the objects using the SDS based on the priority of importance of the objects.

In step 506, information gathered by the plurality of external sensors 206 and information received by the V2X receivers 208 may be fused to increase the confidence factors of the objects detected together with the range and direction of the objects relative to the motor vehicle 300. The newly detected objects are compared with existing objects in the PSG 112 that were previously detected.

In step 508, if the newly detected objects and previously detected objects are determined to be the same, then the newly detected objects are fused with the previously detected objects to obtain greater fidelity, also known as high fidelity, of the object. Greater fidelity includes increased details on an object's classification and location with respect to the motor vehicle 300.

In step 510, once the newly detected objects and previously detected objects are fused, the movements of the objects are tracked and predicted based on historic locations and trends in movement of the objects.

In step 512, the PSG 112 is generated, published, and becomes accessible by various vehicle systems that require information about the surroundings of the motor vehicle. The PSG 112 contains information on a set of localized objects, categories of each object, and relationship between each object and the motor vehicle 300. The PSG 112 is continuously updated and historical events of the PSG 112 may be recorded.

In step 514, a SDL controller 212 subscribes to the published PSG 112. In step 516, the SDL controller 212 publishes a real-time copy of the PSG 112 that may be subscribed to by various other vehicle systems. The various vehicle systems may utilize the published PSG 112 stored in the SDL controller 212 to operate in a temporary "limp-home" mode if the external sensors 206 or perception controller 202 malfunctions.

In step 518, the SDL controller 212 extracts the information stored in the PSG 112 as input to execute software applications 238 for the operation of the various motor vehicle systems. In step 520, the software applications 238 may redefine and publish the redefined focus regions in the PSG 112.

In step 522, if the software applications' redefined focus regions are different from the previously defined focus regions, such as the default focus regions, then in step 524, the priority manager reconfigures sensor preprocessing according to the currently redefined focus regions in the PSG 112 and the process starts again from step 504. If the software applications redefined focus regions are the same as the previously defined focus regions (i.e. not redefined) then the output of the software applications 238 are transmitted to the various vehicle systems.

The various software applications that may utilize the information stored in the PSG 112 extracted by the SDL controller 212 may include, but not limited to, APPS for communicating by V2X to other vehicles or roadside units, rendering a 3-D PSG on a HMI, controlling the vehicle drive systems, activating systems, and blind spot monitoring.

Referring back to FIG. 3, the externals sensors 302, 304, and 306 are distributed about the periphery of the motor vehicle 300 such that various groups of sensors 302, 304, and 306 may collaborate with one another to collected detailed information from regions of interest 250R, 252R, 254R, 256R in the real-world environment adjacent the vehicle 300. The regions of interest 250R, 252R, 254R, 256R corresponds to focus regions 250, 252, 254, 256 defined in the PSG 112. The priority manager identifies the groups of external sensors 302, 304, and 306 having an effective sensor coverage area that covers the corresponding portion of real-world region of interest 250R, 252R, 254R, 256R and increases processing power to process information from the identified externals sensors 302, 304, and 306.

As an example, the vehicle 300 is shown with four regions of interest 250R, 252R, 254R, 256R in the real-world environment corresponding to four focus regions 250, 252, 254, 256 defined in the PSG 112. The focus regions 250, 252, 254, 256 include both primary focus regions 250, 252 and secondary focus regions 254, 256.

The primary focus regions 250, 252 are defined by the perception controller 202 based on the currently requirements of the vehicle 300 for the safe operation of the vehicle 300. The forward primary focus region 250 is shown defined in front of the vehicle 300 to detect and classify objects in front of the vehicle 300 as the vehicle 300 travels in a forward direction. Similarly, a rear primary focus region 252 is defined behind the vehicle 300 when the vehicle 300 moves in the rearward direction.

The secondary focus regions 254, 256 are defined by the software applications, or APPS 238, in the SDL controller 212. The rear right focus region 254 may be defined to detect objects as the vehicle 300 is moving rearward during a maneuver to parallel park the vehicle. The rear left focus region 256 may be defined to detect an object in the vehicle's 300 blind spot as the vehicle 300 prepares for a lane change.

The focus regions 250, 252, 254, 256 may overlap and form overlapping regions 258, 260. The rear primary focus region 252 is shown overlapping the rear right focus region 254 to define the overlapping region 258. The rear primary focus region 252 is shown overlapping the rear left focus region 256 to define the overlapping region 260.

The primary focus regions 250, 252 have a higher priority level than the overlapped focus regions 258, 260, which have a higher priority level than the secondary focus regions 254, 256 with respect to allocating processing power for analyzing collected sensor information pertaining to each of the regions.

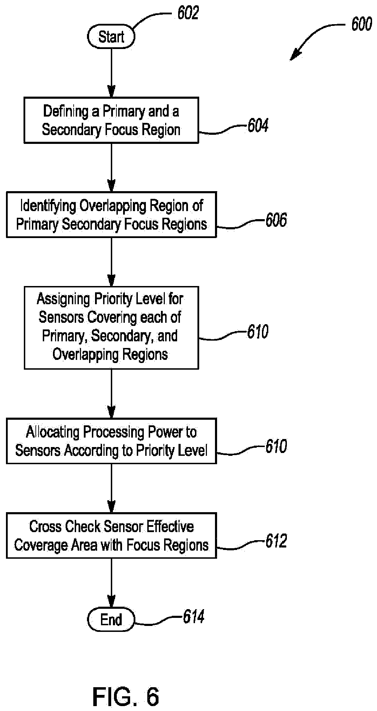

FIG. 6 shows a method 600 for prioritizing sensors for a perception system. The method begins in step 602, a plurality of sensors collects sensor information about a surrounding area of a motor vehicle. A perception scene graph (PSG) is generated by a perception controller based on the collected sensor information.

In step 604, a primary focus region and a secondary focus region in the virtual map of the surrounding area within the PSG are determined. The primary focus region is determined by the perception controller based on predetermined criteria required for the safe operation of the vehicle. The predetermined criteria may include the speed and direction of the vehicle, as well as the proximity of the vehicle relative to adjacent objects. The secondary focus region is determined by the vehicle software application executed by the SDL controller.

In step 606, overlapping regions between the focus regions are identified. Overlapping regions between two primary focus regions are considered to be a part of either of the primary focus regions. Overlapping regions between two secondary focus regions are considered to be a part of either of the second focus regions. However, overlapping regions between a primary focus region and a secondary focus region are identified for assigning a priority level.

In step 608, a high-level priority is assigned to the sensors collecting information contributing to the primary focus region. A low-level priority is assigned to the sensors collecting information contributing to the secondary focus region. A mid-level priority is assigned to the sensors collecting information contributing to an overlapping focus region.

In step 610, processing power is allocated to process the collected information. The information collected by the high-level priority sensors is allocated a greater processing power than the information collected by low-level priority sensors. Information collected by the mid-level priority sensors is allocated processing power lesser than the processing power allocated for the high-level sensors, but more than the processing power allocated for the low-level sensor.

In step 612, the effective coverage areas of the sensors are cross-checked with the focus regions. A group of sensors are identified for a specific focus region, in which each of sensors in the group includes an effective coverage area that covers at least a portion of the specific focus region. The collected sensor information from the group of sensors are fused to obtain the overall area of coverage by the group of sensors. The overall area of coverage by the group of sensors is compared with the primary focus region.

The method ends in step 614, where If the overall area of coverage by the group of sensors is less than then specific focus region, then the perception controller generates a warning signal to notify the operator of the vehicle of limited coverage or obtain the missing information by obtaining a PSG via V2X communications.

The disclosure has described certain preferred embodiments and modifications thereto. Further modifications and alterations may occur to others upon reading and understanding the specification. Therefore, it is intended that the disclosure not be limited to the particular embodiment(s) disclosed as the best mode contemplated for carrying out this disclosure, but that the disclosure will include all embodiments falling within the scope of the appended claims.

## Claims

1. A method (600) of prioritizing sensors for a perception system (200), comprising the steps of:
- collecting sensor information, by a plurality of sensors, about a surrounding area of a motor vehicle;
- generating a perception scene graph (PSG) (112) by a perception controller (202);
- defining a primary focus region (250, 252) and a secondary focus region (254, 256) in the surrounding area; and
- assigning a high-level priority to the primary focus region (250, 252), and assigning a low-level priority to the secondary focus region (254, 256).

2. The method (600) of prioritizing sensors for a perception system (200) of claim 1, wherein the PSG (112) comprises a virtual map of the surrounding area based on the collected sensor information;
- wherein the primary focus region (250. 252) and the secondary focus region (254, 256) are defined in in the virtual map of the surrounding area; and
- wherein the high-level priority is to the sensors collecting information contributing to the primary focus region (250. 252), and the low-level priority is assigned to the sensors collecting information contributing to the secondary focus region (254, 256).

3. The method (600) of prioritizing sensors for a perception system (200) of claim 2, further including the step of allocating a greater processing power to process the information collected by the high-level priority sensors than to process the information collected by low-level priority sensors.

4. The method (600) of prioritizing sensors for a perception system (200) of claim 3, further comprising the steps of:
- identifying an overlapping region (258, 260) between the primary focus region (250, 252) and a secondary focus region (254, 256);
- assigning a mid-level priority to the sensors collecting information contributing to any overlapping focus region (258, 260); and
- allocating a processing power to process the information collected by the mid-level priority sensors, wherein the processing power is less than the processing power allocated for the high-level sensors but greater than the processing power allocated for the low-level sensors.

5. The method (600) of prioritizing sensors for a perception system (200) of claim 4, further comprising the step of extracting information from the PSG (112), by a state decision logic controller (212), for executing a vehicle software application;
- wherein the secondary focus region (254, 256) is determined by the vehicle software application, and
- wherein the primary focus region (250, 252) is determined by a perception controller (202) based on predetermined criteria required for the safe operation of the vehicle.

6. The method (600) of prioritizing sensors for a perception system (200) of claim 5, further comprising the steps of:
- identifying a first group of sensors, wherein each sensor includes an effective coverage area that covers at least a portion of the primary focus region (250, 252);
- fusing the collected sensor information from the first group of sensors to obtain the overall coverage area of the first group of sensors;
- comparing the overall area of coverage of the first group of sensors with the primary focus region (250, 252); and
- if the overall area of coverage of the first group of sensors is less than then primary focus region (250, 252), then the perception controller (202) generates a warning signal and preferably identifying a second group of sensors, wherein each sensor includes an effective coverage area that covers at least a portion of the second focus region (254, 256);
- fusing the collected sensor information from the second group of sensors to obtain the overall coverage area of the second group of sensors;
- comparing the overall area of coverage of the secondary group of sensors with the secondary focus region (254, 256); and
- if the overall area of coverage by the second group of sensors is less than secondary focus region (254, 256), then the perception controller (202) generates a warning signal.

7. The method of prioritizing sensors for a perception system (200) of claim 6, further comprising the step of allocating greater processing power to the first group of sensors than the second group of sensors and preferably identifying a subset of sensors from the first group of sensors and second group of sensors, wherein the subset of sensors has an overall coverage area that includes the overlapping region (258, 260); and allocating greater processing power to the subset of sensors than the second group of sensors, but less than the first group of sensors.

8. The method (600) of prioritizing sensors for a perception system (200) of claim 1 in conjunction with claim 4, further comprising the steps of:
- assigning a mid-level priority to the overlapping region (258, 260); and
- allocating processing power to process collected information, wherein information collected from a high-level priority region will be allocated greater processing power than the information collected from the mid-level or low-level priority regions and wherein the information collected from a mid-level priority region is preferably allocated lesser processing power than the information collected from high-level priority region, but higher processing power than the information collected from low-level priority region.

9. The method (600) of prioritizing sensors for a perception system (200) of claim 8, further comprising the steps of:
- identifying sensors, where each sensor includes an effective coverage area that covers at least a portion of the primary focus region (250, 252);
- fusing the collected sensor information from the plurality of sensors to obtain the overall coverage area;
- comparing the overall coverage area with the primary focus region (250, 252); and
- if the primary focus area (250, 252) is greater than the overall coverage area, then generate an alarm signal and preferably further comprising the steps of:
- identifying sensors, where each sensor includes an effective coverage area that covers at least a portion of the secondary focus region (254, 256);
- fusing the collected sensor information from the plurality of sensors to obtain the overall coverage area;
- comparing the overall coverage area with the secondary focus region (254, 256); and
- if the secondary focus area is greater than the overall coverage area, then generate an alarm signal.

10. The method (600) of prioritizing sensors for a perception system (200) of any of the claims 8 or 9, wherein the primary focus region (250, 252) is determined by a perception controller (202) based on the predetermined operating parameters of the vehicle and wherein preferably the secondary focus region (254, 256) is determined by a perception controller (202) based on the input required by vehicle software applications.

11. A perception system (200) for a motor vehicle, comprising a:
- a plurality of sensors configured to gather information on a surrounding area of the motor vehicle;
- a pre-processor in communication with the plurality of sensors, wherein the pre-processor is configured to isolate and detect objects in the surrounding of the motor vehicle;
- at least one perception controller (202) in communication with the pre-processor to receive the processed sensor information to generate a perception scene graph (PSG) (112) containing a virtual map of the surroundings area based on the gathered information; and
- a plurality of state sensors (214) configured to determine the state of the vehicle including at least one of a vehicle state comprising heading, velocity, and acceleration;
- wherein the perception controller (202) is further configured to identify a primary focus region (250, 252) in the PSG (112) based on the predetermined state of the vehicle for the safe operation of the vehicle.

12. The perception system (200) for a motor vehicle of claim 11, further comprising a state decision logic controller (212) configured to extract information from the PSG (112) to execute a vehicle application routine; wherein the vehicle application routine includes instructions to identify a secondary focus region (254, 256).

13. The perception system (200) for a motor vehicle of claim 12, wherein the perception controller (202) is further configured to identify an overlapping focus region (258, 260) by determining the overlapping regions of the primary focus region (250, 252) and the secondary order focus region (254, 256).

14. The perception system (200) for a motor vehicle of claim 13, wherein the perception controller (202) is configured to assign a high-level priority to the primary focus region (250, 252), a mid-level priority to the overlapping focus region (258, 260), and a low-level priority to the secondary focus region (254, 256).

15. The perception system (200) for a motor vehicle of claim 14, wherein the perception controller (202) is further configured to identifying at least one first sensor that has a sensor region that overlaps the primary focus region (250, 252), at least one second sensor that has a sensor region that overlaps the secondary focus region (254, 256), and at least one third sensor that has a sensor region that overlaps the overlapping focus region (258, 260); wherein a sensor region is the area of detection of a sensor and wherein the perception controller (202) is preferably further configured to determine if one or more of the focus regions is not completely overlapped by one or more sensor regions, and activate a warning system if one or more of the focus regions is not completely overlapped by one or more sensor regions.
